# EUROPEAN PATENT APPLICATION

(11) **EP 4 675 422 A1**
(43) Date of publication of application: **07.01.2026**
(21) Application number: 24763399.3
(22) Date of filing: 10.01.2024
(51) Int. Cl.: G06F 8/65

(54) **INFORMATION PROCESSING DEVICE, INFORMATION PROCESSING METHOD, AND STORAGE MEDIUM**

(30) Priority: 01.03.2023 JP 2023030813
(71) Applicant: TOYOTA JIDOSHA KABUSHIKI KAISHA, Toyota-shi Aichi 471-8571 (JP)
(72) Inventor: MIYAZAWA Tomoaki, Toyota-shi, Aichi 471-8571 (JP); NAKABAYASHI Ryota, Toyota-shi, Aichi 471-8571 (JP); YOMODA Naoki, Toyota-shi, Aichi 471-8571 (JP); MORI Atsushi, Toyota-shi, Aichi 471-8571 (JP); INOUE Hiroshi, Toyota-shi, Aichi 471-8571 (JP); KITAZAWA Tsukasa, Toyota-shi, Aichi 471-8571 (JP)
(74) Representative: J A Kemp LLP
(86) International application number: PCT/JP2024/000237
(87) International publication number: WO 2024/180914

(57) **Abstract**

Provided are an information processing device, an information processing method, and a storage medium. An execution circuit updates at least one software application stored in a storage circuit (14). The execution circuit controls charging power for a secondary battery (71) mounted to a vehicle (100). The at least one software application comprises at least one non-charging-time software application. The non-charging-time software application cannot be updated at the same time as charging the secondary battery (71). When an update of the non-charging-time software application has been requested, the execution circuit, on the basis of input information from a user, selects between the supply of charging power for the secondary battery (71) and the update of the non-charging-time software application, whichever is to be performed first.

## Description

### TECHNICAL FIELD

The present disclosure relates to an information processing device, an information processing method, and a storage medium.

### BACKGROUND

Patent Literature 1 discloses a vehicle that includes an information processing device and a rechargeable battery. The rechargeable battery supplies power to the information processing device. The information processing device includes an execution device and a storage device. The execution device acquires a software program from the outside of the vehicle via wireless communication. The execution device updates the software program stored in the storage device. The execution device controls charging power to the rechargeable battery.

### CITATION LIST

### Patent Literature

Patent Literature 1: JP2021-105923A

### SUMMARY OF INVENTION

### Technical Problem

The information processing device disclosed in the above-described literature may be required to update a software program that cannot be updated simultaneously with charging of the rechargeable battery. If charging is given priority and executed under a situation in which the user desires a software update rather than the charging, the user's request for the software update cannot be satisfied during the execution of the charging. If a software update is given priority and executed in a situation in which the user desires charging rather than the software update, the user's request for the charging cannot be satisfied during the execution of software update. This may cause inconvenience to the user.

### Solution to Problem

An aspect of the present disclosure provides an information processing device. The information processing device includes execution circuitry and storage circuitry. The execution circuitry includes updating one or more software programs stored in the storage circuitry and controlling charging power to a rechargeable battery mounted on a vehicle. The one or more software programs include one or more non-charging-time update software programs. The one or more non-charging-time update software programs cannot be updated simultaneously with charging of the rechargeable battery. The execution circuitry is configured to make, when the update of the non-charging-time update software program is requested, a selection based on input information from a user as to whether to perform supply of the charging power to the rechargeable battery or perform the update of the non-charging-time update software program first.

Another aspect of the present disclosure provides an information processing method. The information processing method is executed by an information processing device that includes execution circuitry and storage circuitry. The information processing method includes updating, by execution circuitry of the information processing device, one or more software programs stored in storage circuitry of the information processing device and controlling, by the execution circuitry, charging power to a rechargeable battery mounted on a vehicle. The one or more software programs include one or more non-charging-time update software programs. The one or more non-charging-time update software programs cannot be updated simultaneously with charging of the rechargeable battery. The information processing method includes, when the update of the non-charging-time update software program is requested, making, by the execution circuitry, a selection based on input information from a user as to whether to perform supply of the charging power to the rechargeable battery or perform the update of the non-charging-time update software program first.

A further aspect of the present disclosure provides a non-transitory computer-readable storage medium storing a program that causes a processing device to execute information processing. The information processing includes updating one or more software programs stored in the storage circuitry and controlling charging power to a rechargeable battery mounted on a vehicle. The one or more software programs include one or more non-charging-time update software programs. The one or more non-charging-time update software programs cannot be updated simultaneously with charging of the rechargeable battery. The information processing includes, when the update of the non-charging-time update software program is requested, making a selection based on input information from a user as to whether to perform supply of the charging power to the rechargeable battery or perform the update of the non-charging-time update software program first.

These configurations allow the charging of the rechargeable battery and the update of the software program to be executed in an order that reflects the preference of the user.

### BRIEF DESCRIPTION OF DRAWINGS

Fig. 1 is a schematic diagram showing the configuration of an updating system.
Fig. 2 is a flowchart illustrating updating/charging control performed in the updating system of Fig. 1.

### DESCRIPTION OF EMBODIMENTS

In this specification, "at least one of A and B" should be understood to mean "only A," or "only B, or "both A and B."

### Schematic Configuration of Updating System

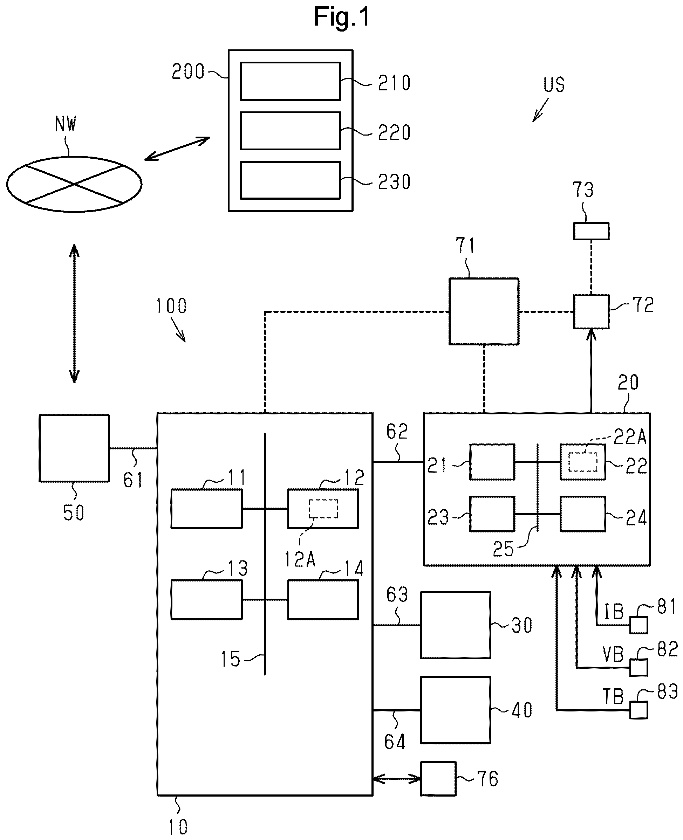

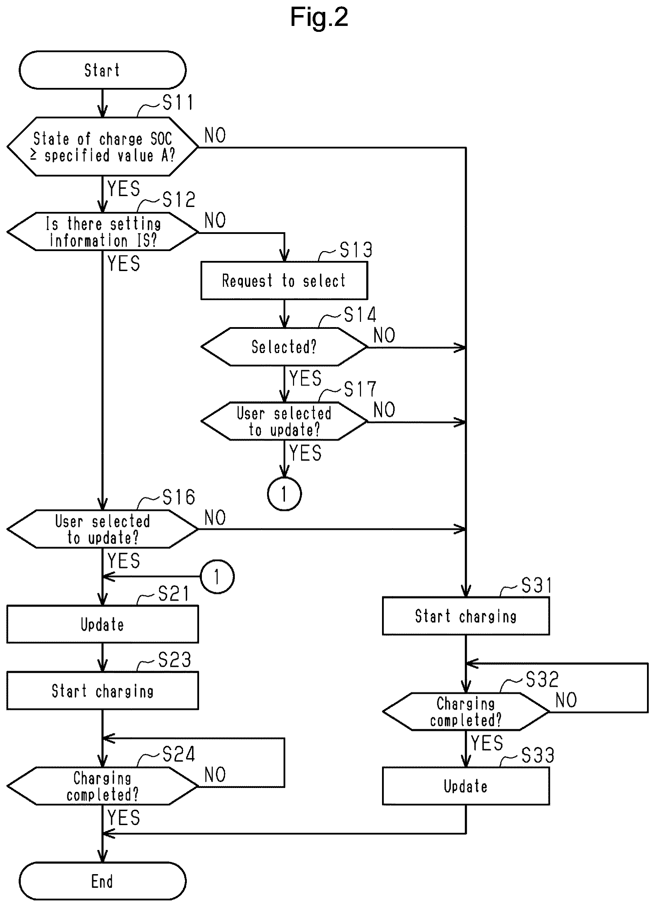

An embodiment of the present disclosure will now be described with reference to Figs. 1 and 2. First, a schematic configuration of an updating system US will be described.

As shown in Fig. 1, the updating system US includes a vehicle 100. The vehicle 100 is, for example, a battery electric vehicle. The vehicle 100 includes a central ECU 10, a charging ECU 20, a multimedia ECU 30, an advanced driver-assistance ECU 40, and a data communication module DCM 50. The vehicle 100 further includes a first external bus 61, a second external bus 62, a third external bus 63, and a fourth external bus 64. ECU is an abbreviation of electronic control unit. DCM is an abbreviation of data communication module.

The central ECU 10 centrally controls the entire vehicle 100. The central ECU 10 includes a central CPU 11, a central ROM 12, a central RAM 13, a central storage device 14, and an internal bus 15. The internal bus 15 interconnects the central CPU 11, the central ROM 12, the central RAM 13, and the central storage device 14 to enable mutual communication. The central ROM 12 stores various programs and various types of data in advance. The central ROM 12 is a storage medium that stores in advance an information processing program 12A as one of the programs. The central RAM 13 is a volatile memory. The central RAM 13 temporarily stores various programs and various types of data. The central CPU 11 is a processing device that executes various processes by reading a program of the central ROM 12 while using the central RAM 13 as a work area. In addition, the central CPU 11 executes various processes of the information processing method by reading the information processing program 12A. In the present embodiment, the central CPU 11 corresponds to an example of a part of an execution device.

The central storage device 14 is configured to store various programs and various types of data. The central storage device 14 is an electrically rewritable non-volatile memory. For example, the central storage device 14 is a NAND flash memory. In the present embodiment, the central storage device 14 is a part of a storage device. That is, the central storage device 14 may be a part of storage circuitry.

The data communication module DCM 50 is connected to the central ECU 10 via a first external bus 61. The data communication module DCM 50 is configured to wirelessly communicate with an external device in the vehicle 100 via a communication network NW. This allows the central ECU 10 to wirelessly communicate with an external device in the vehicle 100 via the first external bus 61 and the data communication module DCM 50.

The charging ECU 20 is configured to communicate with the central ECU 10 via the second external bus 62. The charging ECU 20 executes various processes related to a rechargeable battery 71, which will be described later. The charging ECU 20 includes a charging CPU 21, a charging ROM 22, a charging RAM 23, a charging storage device 24, and an internal bus 25. The internal bus 25 interconnects the charging CPU 21, the charging ROM 22, the charging RAM 23, and the charging storage device 24 to enable mutual communication. The charging ROM 22 stores various programs and various types of data in advance. The charging ROM 22 stores a charging program 22A in advance as one of the programs. The charging ROM 22 is an erasable programmable read-only memory. That is, the charging program 22A stored in the charging ROM 22 is configured to be updated. The charging RAM 23 is a volatile memory. The charging RAM 23 temporarily stores various programs and various types of data. The charging CPU 21 executes various processes by reading a program of the charging ROM 22 while using the charging RAM 23 as a work area. The charging CPU 21 reads the charging program 22A to execute a process that controls charging power to the rechargeable battery 71, which will be described later. In the present embodiment, the charging ROM 22 is a part of the storage device. Thus, the information processing device includes the central ECU 10 and the charging ECU 20. That is, the central storage device 14 and the charging ROM 22 are included in the storage device of the information processing device. The storage device may be storage circuitry. The central ECU 10 and the charging CPU 21 are included in the execution device of the information processing device. The execution device may be execution circuitry.

The charging storage device 24 is configured to store various programs and various types of data. The charging storage device 24 is an electrically rewritable non-volatile memory. For example, the charging storage device 24 is a NOR flash memory.

The multimedia ECU 30 is configured to communicate with the central ECU 10 via the third external bus 63. The multimedia ECU 30 controls, for example, a navigation device and an audio device, which are not illustrated in the drawings. The internal configuration of the multimedia ECU 30 is the same as that of the charging ECU 20. The advanced driver-assistance ECU 40 is configured to communicate with the central ECU 10 via the fourth external bus 64. The advanced driver-assistance ECU 40 performs various types of driver assistance by executing various applications. The applications include an application for causing the vehicle 100 to follow a preceding vehicle while maintaining a constant distance between the vehicle 100 and the preceding vehicle. The preceding vehicle travels ahead of the vehicle 100. The applications further include, for example, an application for automatically braking the vehicle 100 in order to mitigate damage to the vehicle 100 from a collision. The internal configuration of the advanced driver-assistance ECU 40 is the same as that of the charging ECU 20. The vehicle 100 includes various ECUs such as a powertrain ECU and a body ECU, which are not illustrated in the drawings.

As shown in Fig. 1, the vehicle 100 includes a device group composed of multiple devices. Examples of the devices include the rechargeable battery 71, a converter 72, an inlet 73, and a display 76. The rechargeable battery 71 supplies power to, for example, the central ECU 10, the charging ECU 20, the multimedia ECU 30, the advanced driver-assistance ECU 40, and the data communication module DCM 50. In Fig. 1, a broken line is used to represent, by way of example, a power path connecting the rechargeable battery 71 to the central ECU 10, and a power path connecting the rechargeable battery 71 to the charging ECU 20. The inlet 73 is electrically connected to the rechargeable battery 71 via the converter 72. The inlet 73 is connectable to an external power supply (not shown). On condition that the inlet 73 and the external power supply are connected to each other, the external power supply supplies AC power to the inlet 73. This causes the converter 72 to convert the AC power supplied from the inlet 73 into DC power. As a result, the rechargeable battery 71 is charged by the power supplied from the external power supply. As described above, the vehicle 100 is a battery electric vehicle. Thus, on condition that the inlet 73 and the external power supply are connected to each other, the external power supply is also configured to supply power to a high-voltage rechargeable battery (not shown) via a high-voltage converter (not shown).

The display 76 is configured to display various types of information. The display 76 is a touch panel display. This allows the user of the vehicle 100 to input various types of information via the display 76. That is, the display 76 functions both as an output device that outputs information to the user and as an input device that receives information from the user.

As shown in Fig. 1, the vehicle 100 includes a sensor group having multiple sensors. Examples of the sensors include a current sensor 81, a voltage sensor 82, and a temperature sensor 83. The current sensor 81 detects a current IB, which is to be input to and output from the rechargeable battery 71. The voltage sensor 82 detects a voltage VB, which is a terminal-to-terminal voltage of the rechargeable battery 71. The temperature sensor 83 detects a battery temperature TB, which is the temperature of the rechargeable battery 71.

The charging ECU 20 acquires corresponding signals from the current sensor 81, the voltage sensor 82, and the temperature sensor 83. The charging ECU 20 calculates a state of charge SOC of the rechargeable battery 71 based on the current IB, the voltage VB, and the battery temperature TB at predetermined control cycles. In the present embodiment, the state of charge SOC is an example of the remaining amount of the rechargeable battery 71. The state of charge SOC is represented by the following equation (1).

Equation (1): State of charge SOC [%] = remaining capacity [Ah] of rechargeable battery 71 / full charging capacity [Ah] of rechargeable battery 71 × 100 [%].

In the above-described equation (1), the full charge capacity is the maximum amount of power that can be stored in the rechargeable battery 71. The full charge capacity slightly varies depending on the history of the voltage VB and the current IB of the rechargeable battery 71 and depending on the battery temperature TB. Thus, the full charge capacity is calculated based on the history of the voltage VB and the current IB of the rechargeable battery 71 and based on the battery temperature TB. The remaining capacity is calculated, for example, based on an integrated value of the current IB measured after the rechargeable battery 71 is fully charged and based on the voltage VB.

The charging ECU 20 outputs a control signal to the converter 72 to control the converter 72. Accordingly, on condition that the inlet 73 and the external power supply are connected to each other, the charging ECU 20 is configured to control the charging power to the rechargeable battery 71 by controlling the converter 72.

The central ECU 10 outputs a control signal to the display 76 to display various types of information on the display 76. The central ECU 10 acquires, from the display 76, input information input by the user of the vehicle 100.

As shown in Fig. 1, the updating system US includes a data center 200. The data center 200 is, for example, a server. The data center 200 includes a center execution unit 210, a center storage unit 220, and a center communication unit 230. The center communication unit 230 is configured to communicate with an external device for the data center 200 via the communication network NW. The center storage unit 220 stores, for example, information acquired by the data center 200. The center storage unit 220 stores various programs in advance. The center execution unit 210 executes various processes by reading a program of the center storage unit 220. The center execution unit 210 is, for example, a CPU.

### Update/Charge Control

The software program that can be updated simultaneously with the charging of the rechargeable battery 71 may be referred to as a first software program. The software program that cannot be updated simultaneously with the charging of the rechargeable battery 71 may be referred to as a second software program or a non-charging-time update software program. When an update of the first software program is requested, the central ECU 10 updates the first software program regardless of whether charging power is supplied to the rechargeable battery 71.

When charging of the rechargeable battery 71 is requested and an update of the second software program is requested, the central CPU 11 executes the update/charge control. The case in which charging of the rechargeable battery 71 is requested is, for example, a case in which the inlet 73 and the external power supply are connected to each other. The case in which an update of a software program is requested is, for example, a case in which all of the following requirements (1) and (2) are satisfied.

Requirement (1): The central ECU 10 has received a campaign notification from the data center 200 indicating that a new software program exists.

Requirement (2): After the central ECU 10 receives a campaign notification, the central ECU 10 downloads a new software program to be updated from the data center 200 so that the central storage device 14 stores the new software program.

The second software program, that is, the software program that cannot be updated simultaneously with the charging of the rechargeable battery 71 is, for example, a charging program 22A. In other words, the charging program 22A is an example of the non-charging-time update software program. In the present embodiment, the central CPU 11 starts to execute the update/charge control by reading the information processing program 12A.

As shown in Fig. 2, when the update/charge control is started, the central CPU 11 executes a process of step S11. In step S11, the central CPU 11 determines whether the state of charge SOC of the rechargeable battery 71 is greater than or equal to a specified value A, which has been set in advance. The specified value A is a threshold used to determine whether a sufficient margin of the state of charge SOC is available. When a sufficient margin of the state of charge SOC is available, a software program is permitted to be updated prior to the supply of charging power to the rechargeable battery 71. The specified value A is, for example, 20%. In step S11, when the central CPU 11 determines that the state of charge SOC of the rechargeable battery 71 is greater than or equal to the specified value A (S11: YES), the central CPU 11 advances the process to step S12.

In step S12, the central CPU 11 determines whether setting information IS has been stored in the central storage device 14. The setting information IS includes first time period information T1 and second time period information T2. The first time period is an update priority time period. During the update priority time period, a software program is to be updated prior to the supply of charging power to the rechargeable battery 71. The second time period is a charging priority time period. During the charging priority time period, the supply of charging power to the rechargeable battery 71 is performed prior to the update of the software program.

For example, the setting information IS is stored as follows. First, prior to starting the update/charge control, the user of the vehicle 100 operates the display 76 to access a settings screen for setting the setting information IS. When the user of the vehicle 100 requests access to the settings screen, the central CPU 11 outputs a signal related to the settings screen to the display 76. Then, the central CPU 11 requests in advance the user of the vehicle 100 via the display 76 to make a user selection as to which of the supply of the charging power to the rechargeable battery 71 or the update of the software program is to be performed first. Specifically, the central CPU 11 requests the user to set the first time period information T1 and the second time period information T2. The user of the vehicle 100 is permitted to set the first time period information T1 and the second time period information T2 via the display 76. The first time period information T1 specifies, for example, a time period such as 0:00 to 3:00. That is, the first time period information T1 specifies, for example, a midnight time period. The second time period information T2 specifies, for example, a time period such as 3:00 to 24:00. The first time period information T1 and the second time period information T2 are configured to be set within non-overlapping ranges. The first time period information T1 and the second time period information T2 are configured to be set such that no time gap occurs between them. Accordingly, all time periods within a day, that is, the entire 24 hours, belong to either the first time period information T1 or the second time period information T2. Then, the central CPU 11 acquires the first time period information T1 and the second time period information T2 input by the user of the vehicle 100, as a result of selection made in advance by the user of the vehicle 100 (i.e., as a result of a user selection). Further, the central CPU 11 stores the result of a user selection made in advance by the user of the vehicle 100 in the central storage device 14 as the setting information IS.

In step S12, when the central CPU 11 determines that the setting information IS has been stored in the central storage device 14 (S12: YES), the central CPU 11 advances the process to step S16. That is, in a case in which an update of the second software program, which cannot be updated simultaneously with the charging of the rechargeable battery 71, has been requested and the setting information IS has already been stored in the central storage device 14, the central CPU 11 advances the process to step S16 without executing the process of step S13, which will be described later.

In step S16, the central CPU 11 acquires the setting information IS as input information IU from the user of the vehicle 100. Based on the first time period information T1 and the second time period information T2 included in the input information IU, the central CPU 11 determines whether the user of the vehicle 100 has selected to update a software program first. For example, in a case in which the time at which the process of step S16 is executed corresponds to the time period set in the first time period information T1, the central CPU 11 determines that the user of the vehicle 100 has selected to update a software program first. For example, in a case in which the time at which the process of step S16 is executed corresponds to the time period set in the second time period information T2, the central CPU 11 determines that the user of the vehicle 100 has not selected to update a software program first. In other words, the central CPU 11 determines that the user of the vehicle 100 has selected to supply charging power to the rechargeable battery 71 first.

In the above-described step S12, when the central CPU 11 determines that the setting information IS has not been stored in the central storage device 14 (S12: NO), the central CPU 11 advances the process to step S13. That is, the central CPU 11 advances the process to step S13 on condition that an update of the non-charging-time update program, which cannot be updated simultaneously with the charging of the rechargeable battery 71, has been requested.

In step S13, the central CPU 11 outputs a control signal to the display 76, thereby requesting the user of the vehicle 100 to make a user selection as to which of the supply of the charging power to the rechargeable battery 71 or the update of the software program is to be performed first. Specifically, the central CPU 11 displays a charging execution button and an update execution button on the display 76. After step S13, the central CPU 11 advances the process to step S14.

In step S14, the central CPU 11 determines whether the user of vehicle 100 has selected which of the supply of charging power to the rechargeable battery 71 and the update of the software program is to be performed first. For example, when the user of the vehicle 100 presses one of the charging execution button and the update execution button before a predetermined specified period elapses since the point in time when step S13 was executed, the central CPU 11 determines that the user of the vehicle 100 has made a user selection. When the user of the vehicle 100 presses neither the charging execution button nor the update execution button before a predetermined specified period elapses since the point in time when step S13 was executed, the central CPU 11 determines that the user of the vehicle 100 has not made a user selection. The specified period is a duration of several minutes to several tens of minutes. In step S14, when the central CPU 11 determines that the user of the vehicle 100 has selected which of the supply of charging power to the rechargeable battery 71 or the update of the software program is to be performed first (S14: YES), the central CPU 11 advances the process to step S17.

In step S17, the central CPU 11 acquires, as the input information IU from the user of the vehicle 100, the result selected by the user of the vehicle 100 in step S14 to respond to the request to the user of the vehicle 100 in step S13. Based on the input information IU, the central CPU 11 determines whether the user of the vehicle 100 has selected to update the software program first. For example, in a case in which the user of the vehicle 100 selected the update execution button in step S14, the central CPU 11 determines that the user of the vehicle 100 has already selected to update the software program first. In a case in which the user of the vehicle 100 has selected the charging execution button in step S14, the central CPU 11 determines that the user of the vehicle 100 has not selected to update the software program first. In other words, the central CPU 11 determines that the user of the vehicle 100 has selected to supply charging power to the rechargeable battery 71 first.

In step S16 or step S17, when the central CPU 11 determines that the user of the vehicle 100 has selected to update the software program first (S16: YES or S17: YES), the central CPU 11 advances the process to step S21.

In step S21, the central CPU 11 updates the software program stored in the charging ROM 22. Specifically, the central CPU 11 first turns off the charging ECU 20. Further, the central CPU 11 installs, in the charging ROM 22 of the charging ECU 20, the new charging program 22A stored in the central storage device 14. The central CPU 11 then activates the installed charging program 22A. Subsequently, the central CPU 11 turns on the charging ECU 20. After step S21, the central CPU 11 advances the process to step S23.

In step S23, the central CPU 11 starts the supply of charging power to the rechargeable battery 71. Specifically, the central CPU 11 outputs a control signal to the charging ECU 20. As a result, the charging ECU 20 starts the supply of charging power to the rechargeable battery 71. After step S23, the central CPU 11 advances the process to step S24.

In step S24, the central CPU 11 determines whether the supply of charging power to the rechargeable battery 71 is completed. For example, when the state of charge SOC of the rechargeable battery 71 is greater than or equal to a predetermined reference value B, the central CPU 11 determines that the supply of the charging power to the rechargeable battery 71 is completed. The reference value B is a threshold used to determine whether the state of charge SOC of the rechargeable battery 71 is sufficiently high. In the present embodiment, the reference value B is, for example, 100%. In step S24, when the central CPU 11 determines that the supply of the charging power to the rechargeable battery 71 is not completed (S24: NO), the central CPU 11 proceeds again to step S24. In step S24, when the central CPU 11 determines that the supply of the charging power to the rechargeable battery 71 is completed (S24: YES), the central CPU 11 ends the current update/charge control. As described above, in the processes from step S21 to step S24, a software program is updated prior to the supply of charging power to the rechargeable battery 71.

In the above-described step S11, when the central CPU 11 determines that the state of charge SOC of the rechargeable battery 71 is less than the specified value A (S11: NO), the central CPU 11 advances the process to step S31. That is, when an update of the software program that cannot be updated simultaneously with the charging of the rechargeable battery 71 is requested and the state of charge SOC of the rechargeable battery 71 is less than the specified value A, the central CPU 11 advances the process to step S31. In step S14, when the central CPU 11 determines that the user of the vehicle 100 has not selected which of the supply of charging power to the rechargeable battery 71 or the update of the software program is to be performed first (S14: YES), the central CPU 11 advances the process to step S31. Further, in step S16 or step S17, when the central CPU 11 determines that the user of the vehicle 100 has selected to supply charging power to the rechargeable battery 71 first (S16: NO or S17: NO), the central CPU 11 advances the process to step S31.

In step S31, the central CPU 11 starts the supply of charging power to the rechargeable battery 71. The process of step S31 is the same as that of the above-described step S23. After step S31, the central CPU 11 advances the process to step S32.

In step S32, the central CPU 11 determines whether the supply of charging power to the rechargeable battery 71 is completed. The process of step S32 is the same as that of the above-described step S24. That is, in step S32, when the central CPU 11 determines that the supply of the charging power to the rechargeable battery 71 is not completed (S32: NO), the central CPU 11 proceeds again to step S32. In step S32, when the central CPU 11 determines that the supply of charging power to the rechargeable battery 71 is completed (S32: YES), the central CPU 11 advances the process to step S33.

In step S33, the central CPU 11 updates the software program stored in the charging ROM 22. The process of step S33 is the same as that of the above-described step S21. After step S33, the central CPU 11 ends the current update/charge control. As described above, in the processes from step S31 to step S33, the supply of the charging power to the rechargeable battery 71 is performed prior to updating a software program.

### Operation of Present Embodiment

In the vehicle 100, when charging of the rechargeable battery 71 is requested and an update of the first software program, which can be updated simultaneously with charging of the rechargeable battery 71, is requested, the central CPU 11 simultaneously executes the supply of charging power to the rechargeable battery 71 and the software update program.

In the vehicle 100, when charging of the rechargeable battery 71 is requested and an update of the second software program, which cannot be updated simultaneously with charging of the rechargeable battery 71, is requested, the central CPU 11 executes the update/charging control as illustrated in Fig. 2. In step S16 or S17, the central CPU 11 determines whether the user of the vehicle 100 has selected to update the software program first, based on the input information IU or the setting information IS from the user of the vehicle 100. For example, in a case in which the user of the vehicle 100 has selected to update the software program first, the central CPU 11 executes the processes from step S21 to step S24. That is, the central CPU 11 updates the software program prior to the supply of charging power to the rechargeable battery 71. For example, in a case in which the user of the vehicle 100 has selected to supply charging power to the rechargeable battery 71 first, the central CPU 11 executes the processes of steps S31 to S33. That is, the central CPU 11 supplies charging power to the rechargeable battery 71 prior to updating the software program.

### Advantages of Present Embodiment

(1) As described above, the central CPU 11 selects which of the supply of charging power to the rechargeable battery 71 or the update of a software program is to be performed first, based on the input information IU from the user of the vehicle 100. This allows the supply of the charging power to the rechargeable battery 71 and the update of the software program to be executed in an order that reflects the preference of the user of the vehicle 100.
(2) The central CPU 11 advances the process to step S13 on condition that an update of the software program that cannot be updated simultaneously with the charging of the rechargeable battery 71 has been requested. In step S13, the central CPU 11 outputs a control signal to the display 76, thereby requesting the user of the vehicle 100 to make a user selection as to which of the supply of the charging power to the rechargeable battery 71 or the update of the software program is to be performed first. In step S17, the central CPU 11 acquires, as the input information IU from the user of the vehicle 100, the result selected by the user of the vehicle 100 in step S14 to respond to the request to the user of the vehicle 100 in step S13. Thus, when an update of non-charging-time update software program is requested, the user of the vehicle 100 selects as to, in accordance with the preference at that time of the request, which of the supply of charging power to the rechargeable battery 71 or the update of the software program is to be performed first.
(3) Prior to starting the update/charge control, the user of the vehicle 100 may operate the display 76 to access a settings screen for setting the setting information IS. Then, the central CPU 11 requests in advance the user of the vehicle 100 via the display 76 to make a user selection as to which of the supply of charging power to the rechargeable battery 71 or the update of the software program is to be performed first. The central CPU 11 stores the result selected in advance by the user of the vehicle 100 in the central storage device 14 as the setting information IS. In step S12 of the update/charge control, in a case in which the setting information IS has already been stored in the central storage device 14, the central CPU 11 advances the process to step S16 without executing the process of step S13. In other words, in a case in which the update of a software program that cannot be updated simultaneously with the charging of the rechargeable battery 71 has been requested and the setting information IS has already been stored in the central storage device 14, the central CPU 11 acquires the setting information IS as the input information IU without requesting the user of the vehicle 100 to make a user selection. Thus, for example, compared to a case in which the user of the vehicle 100 is always required to make a user selection in step S13, the number of opportunities for the user of the vehicle 100 to make a user selection is reduced. This limits excessive increases in opportunities for the user of the vehicle 100 to make a user selection.
(4) For example, there may be a hypothetical configuration in which, for example, the setting information IS is configured to be set to either information indicating that a software program is always to be updated prior to the supply of charging power to the rechargeable battery 71, or information indicating that the supply of charging power to the rechargeable battery 71 is always to be performed prior to the update of a software program. Such a configuration allows the preference of the user of the vehicle 100 to be reflected to some extent. Nevertheless, such a configuration cannot reflect the preference of the user of the vehicle 100 that may vary, for example, depending on the time period.
   In the present embodiment, the setting information IS includes the first time period information T1 and the second time period information T2. The first time period information T1 indicates that the software program is to be updated prior to the supply of charging power to the rechargeable battery 71. The first time period information T1 specifies, for example, a time period such as 0:00 to 3:00. The second time period information T2 indicates that the supply of charging power to the rechargeable battery 71 is performed prior to updating a software program. The second time period information T2 specifies, for example, a time period such as 3:00 to 24:00. For example, compared to a case in which the setting information IS is set to only information indicating that a software program is always to be updated prior to the supply of charging power to the rechargeable battery 71, the present embodiment reflects the preference of the user of the vehicle 100 that varies depending on the time period.
(5) In step S11, when the update of a software program that cannot be updated simultaneously with the charging of the rechargeable battery 71 is requested and the state of charge SOC of the rechargeable battery 71 is less than the specified value A, the central CPU 11 advances the process to step S31. Thus, in a situation in which the state of charge SOC of the rechargeable battery 71 is less than the specified value A, that is, in a situation in which the state of charge SOC of the rechargeable battery 71 is relatively low, the supply of charging power to the rechargeable battery 71 is performed prior to the update of the software program. This limits depletion of the state of charge (SOC) of the rechargeable battery 71.
(6) In the vehicle 100, when charging of the rechargeable battery 71 is requested and also an update of a software program that can be updated simultaneously with charging of the rechargeable battery 71 is requested, the central CPU 11 simultaneously executes the supply of charging power to the rechargeable battery 71 and the update of the software program. In this case, for example, unlike step S13, the central CPU 11 does not request the user of the vehicle 100 to make a user selection as to which of the supply of charging power to the rechargeable battery 71 or the update of the software program is to be performed first. This limits an increase in the processing load on the central CPU 11 that would arise from a selection request for the user of the vehicle 100.

### Modifications

The present embodiment may be modified as described below. The present embodiment and the following modifications can be combined as long as the combined modifications remain technically consistent with each other.

In the above-described embodiment, the update/charge control may be changed.

For example, the process performed when a negative determination is made in step S11 may be changed. For example, when a negative determination is made in step S11, first, the central CPU 11 may supply charging power to the rechargeable battery 71 until the state of charge SOC of the rechargeable battery 71 becomes greater than or equal to the specified value A. After the state of charge SOC of the rechargeable battery 71 becomes greater than or equal to the specified value A, the central CPU 11 may advance the process to step S12.

For example, the process of step S11 may be omitted. For example, the central CPU 11 may execute the process of step S12 when the update/charge control is started. Even if the process of step S11 is omitted, the state of charge SOC of the rechargeable battery 71 is unlikely to excessively decrease.

For example, the setting information IS in step S12 may be changed. Among the entire time periods in a day, time periods that are not included in the time periods corresponding to the first time period information T1 and the second time period information T2 may remain as blank time periods. In this configuration, the time at which step S12 is executed may fall within a time period that does not belong to either the first time period information T1 or the second time period information T2. In this case, even if the setting information IS is stored in step S12, the central CPU 11 may advance the process to step S13.

For example, the setting information IS may include only one of the first time period information T1 and the second time period information T2. In this case, before the update/charge control is started, the central CPU 11 may request the user of the vehicle 100 to set one of the first time period information T1 and the second time period information T2. In step S16, if one of the first time period information T1 and the second time period information T2 is stored as the setting information IS, the central CPU 11 is allowed to estimate the other one of the first time period information T1 and the second time period information T2 based on the setting information IS. For example, if the second time period information T2 in the setting information IS indicates 3:00 to 24:00, the central CPU 11 is allowed to estimate that a time period which is not the second time period information T2 (i.e., 0:00 to 3:00) corresponds to the first time period information T1.

There may be an example in which the setting information IS includes only one of the first time period information T1 and the second time period information T2, and the time at which step S12 is executed does not correspond to the time period set in either the first time period information T1 or the second time period information T2. In this case, even if the setting information IS is stored in step S12, the central CPU 11 may advance the process to step S13.

For example, the setting information IS may include one of information indicating that a software program is always updated before the supply of charging power to the rechargeable battery 71 and information indicating that the supply of charging power to the rechargeable battery 71 is always performed before updating a software program.

For example, the process of step S12 may be omitted. For example, when an affirmative determination is made in step S11, the central CPU 11 may advance the process to step S13.

For example, the processes of steps S13, S14, and S17 may be omitted. For example, when a negative determination is made in step S12, the central CPU 11 may advance the process to step S31. Even in this configuration, if the setting information IS is stored in the central storage device 14, the central CPU 11 is allowed to acquire the stored setting information IS as the input information IU from the user of the vehicle 100.

For example, the processing performed in step S21 may be changed. For example, in step S21, the central CPU 11 may store the new charging program 22A in the central storage device 14 by downloading the new charging program 22A from the data center 200. That is, in this configuration, at the start of the process of step S21, the central storage device 14 does not have to store the new charging program 22A. That is, the above-described condition (2) may be changed. In this case, the condition for executing the update/charge control may also be changed. Further, in the same manner as step S21, the process performed in the step S33 may be changed.

In the above-described embodiment, the configuration of the updating system US may be changed.

For example, the ECU that executes the update/charge control is not limited to the central ECU 10. For example, instead of the central ECU 10, the CPU of the multimedia ECU 30 may execute the update/charge control by reading the information processing program 12A stored in the ROM of the multimedia ECU 30. In this case, the information processor includes the multimedia ECU 30 and the charging ECU 20. That is, the ECUs such as the central ECU 10, the charging ECU 20, the multimedia ECU 30, and the advanced driver-assistance ECU 40 may be used as the information processing device.

For example, the rechargeable battery mounted on the vehicle 100 is not limited to the rechargeable battery 71. For example, the above-described high-voltage rechargeable battery included in the vehicle 100 may be used as the rechargeable battery mounted on the vehicle 100.

For example, instead of or in addition to the display 76, a personal terminal owned by the user of the vehicle 100 may be employed. For example, the central CPU 11 may be configured to acquire, as the input information IU from the user of the vehicle 100, information input by the user of the vehicle 100 by operating the personal terminal. The personal terminal is, for example, a smartphone.

The execution device may include circuitry including one or more processors that execute various processes according to computer programs (software). The execution device may be execution circuitry including one or more dedicated hardware circuits such as application specific integrated circuits (ASIC) that execute at least part of various processes, or a combination thereof. The processor includes a CPU and a memory such as a RAM and a ROM. The memory stores program codes or instructions configured to cause the CPU to execute the processes. The memory, or computer-readable medium, includes any type of storage medium such as a tangible or non-transitory computer-readable medium that is accessible by general-purpose computers and dedicated computers.

## Claims

1. An information processing device, comprising:
execution circuitry; and
storage circuitry, wherein
the execution circuitry is configured to execute:
updating one or more software programs stored in the storage circuitry;
controlling charging power to a rechargeable battery mounted on a vehicle, wherein the one or more software programs include one or more non-charging-time update software programs, and the one or more non-charging-time update software programs cannot be updated simultaneously with charging of the rechargeable battery; and
when the update of the non-charging-time update software program is requested, making a selection based on input information from a user as to whether to perform supply of the charging power to the rechargeable battery or perform the update of the non-charging-time update software program first.

2. The information processing device according to claim 1, wherein the execution circuitry is configured to execute:
requesting the user to make a user selection on condition that the update of the non-charging-time update software program has been requested, wherein the user selection is made by the user as to which of the supply of the charging power to the rechargeable battery or the update of the non-charging-time update software program is to be performed first; and
acquiring the user selection as the input information.

3. The information processing device according to claim 2, wherein the execution circuitry is configured to execute:
requesting the user to make the user selection in advance;
storing, as setting information, the user selection made in advance in the storage circuitry; and
in a case in which the update of the non-charging-time update software program has been requested and the setting information has already been stored in the storage circuitry, acquiring the setting information as the input information without requesting the user to make the user selection.

4. The information processing device according to claim 3, wherein
the setting information includes one or more of:
information on an update-priority time period; and
information on a charging-priority time period,
during the update priority time period, the update of the non-charging-time update software program is to be performed prior to the supply of the charging power to the rechargeable battery, and
during the charging priority time period, the update of the non-charging-time update software program is to be performed subsequent to the supply of the charging power to the rechargeable battery.

5. The information processor according to any one of claims 1 to 4, wherein
the execution circuitry is configured to perform, in a case in which the update of the non-charging-time update software program has been requested and a remaining amount of the rechargeable battery is less than a predetermined threshold, the supply of the charging power to the rechargeable battery prior to the update of the non-charging-time update software program regardless of the input information.

6. An information processing method executed by an information processing device, the information processing method comprising:
updating, by execution circuitry of the information processing device, one or more software programs stored in storage circuitry of the information processing device;
controlling, by the execution circuitry, charging power to a rechargeable battery mounted on a vehicle, wherein the one or more software programs include one or more non-charging-time update software programs, and the one or more non-charging-time update software programs cannot be updated simultaneously with charging of the rechargeable battery; and
when the update of the non-charging-time update software program is requested, making, by the execution circuitry, a selection based on input information from a user as to whether to perform supply of the charging power to the rechargeable battery or perform the update of the non-charging-time update software program first.

7. A non-transitory computer-readable storage medium storing a program that causes a processing device to execute information processing, the information processing includes:
updating one or more software programs stored in the storage circuitry;
controlling charging power to a rechargeable battery mounted on a vehicle, wherein the one or more software programs include one or more non-charging-time update software programs, and the one or more non-charging-time update software programs cannot be updated simultaneously with charging of the rechargeable battery; and
when the update of the non-charging-time update software program is requested, making a selection based on input information from a user as to whether to perform supply of the charging power to the rechargeable battery or perform the update of the non-charging-time update software program first.
